# EUROPÄISCHE PATENTSCHRIFT

(11) **EP 1 260 411 B1**
(45) Veröffentlichungstag und Bekanntmachung des Hinweises auf die Patenterteilung: **15.11.2006**
(21) Anmeldenummer: 02010010.3
(22) Anmeldetag: 04.05.2002
(51) Int. Cl.: B60R 1/10, H04N 5/33, H04N 7/18

(54) **Verfahren und Vorrichtung zur Verbesserung der Sicht in Fahrzeugen**
Method and apparatus for improving visibility in a vehicle
Procédé et dispositif pour améliorer la visibilité dans un véhicule

(30) Priorität: 17.05.2001 DE 10124005
(43) Veröffentlichungstag der Anmeldung: 27.11.2002
(73) Patentinhaber: DaimlerChrysler AG, 70567 Stuttgart (DE)
(72) Erfinder: Gloger, Joachim, 89346 Bibertal (DE); Ritter, Werner, 89077 Ulm (DE)

(56) Entgegenhaltungen:
- EP-A- 0 738 902
- WO-A-92/21205
- DE-U- 9 201 038
- US-A- 5 001 558

## Beschreibung

Die Erfindung betrifft ein Verfahren und eine Vorrichtung zur Verbesserung der Sicht in Fahrzeugen, nach den Oberbegriffen der Patentansprüche 1 und 5. Ein derartiges Verfahren ist aus der Schrift US-A-5 001 558 bekannt.

Die CCD-Kamera ist normalerweise ausschließlich oder überwiegend im Infraroten empfindlich und liefert ein Bild, in dem Objekte mit ihrer Helligkeit im Infraroten erscheinen, die - je nachdem, ob im fernen oder nahen Infrarot aufgenommen wird - mehr oder weniger von der Temperatur der Objekte abhängt. Damit der Fahrer Objekte besser voneinander unterscheiden kann, kann man verschiedenen Helligkeiten verschiedene Farben zuweisen und diese auf einem Farbdisplay anzeigen, wie z.B. in der JP 08127286 A1 beschrieben. Ein solches "Wärmebild" entspricht im wesentlichen einem mit unveränderter spektraler Verteilung ins sichtbare Spektrum verschobenen Infrarotbild der Szene.

In der JP 06121325 A1 wird vorgeschlagen, eine Kamera zu verwenden, die in mehreren verschiedenen Spektralbereichen empfindlich ist, und den einzelnen Spektralbereichen jeweils eine Farbe zuzuordnen, in der das entsprechende Teilbild auf einem Farbdisplay angezeigt wird.

Bei den obengenannten Systemen sieht der Fahrer die Verkehrsszene jedoch nur in Pseudohelligkeiten bzw. Pseudofarben. Eine solche Darstellungsweise ist dem Menschen ungewohnt und fremd, besonders bei Aufnahmen in fernem Infrarot. Daher hat selbst ein an das System gewöhnter Fahrer mehr Mühe, die in Pseudohelligkeiten bzw. Pseudofarben dargestellten Informationen zu verarbeiten, als bei Bildinformationen, die in einem sichtbaren Spektralbereich gewonnen werden.

Aus der US-A-5 001 558 ist ein Verfahren zur Verbesserung der Sicht in Fahrzeugen, insbesondere bei Dunkelheit bekannt, bei dem Bilder aktueller Verkehrsszenen mittels einer Kamera, die außerhalb des sichtbaren Spektrums empfindlich ist, aufgenommen werden und mittels einer Anzeigeoptik im Fahrzeug im sichtbaren Spektrum wiedergegeben werden, wobei automatisch helle Objekten (durch eine Zusätzliche Farb-Kamera) erkannt werden, die in einer von der Kamera aufgenommenen Verkehrsszene enthalten sind, und dass diese hellen erkannten Objekte in einer Farbe, die der Farbe entspricht, die das entsprechende Objekt bei Tageslicht typischerweise hat, auf der Anzeigeoptik wiedergegeben werden.

Aus der DE 40 07 646 ist ein optoelektronisches System für Fahrzeuge bekannt, das zusätzlich zu den normalen Scheinwerfern zwei Infrarotscheinwerfer enthält, die im nahen Infrarot emittierende Laserdioden als Lichtquelle nutzen. Eine CCD-Kamera zur Aufnahme eines Videobildes der aktuellen Verkehrsszene ist im Dachbereich des Fahrzeuges untergebracht. Das Videobild wird dem Fahrer auf einem LCD-Display gezeigt oder auf die Frontscheibe projiziert. Das dargestellte Bild enthält zusätzliche Informationen, die der Fahrer mit seinen eigenen Augen nicht oder nur mit Mühe erfassen kann, insbesondere bei Dunkelheit, schlechter Witterung und Nebel. Damit das projizierte Bild des Beobachtungsraums und das vom Auge direkt beobachtete Bild möglichst gut zur Deckung gelangen und um bei allen Helligkeitsverhältnissen ein ausreichend helles und kontrastreiches Bild vorliegen zu haben, sind die Lage und die Helligkeit des projizierten Bilds veränderlich einstellbar. Die Einstellung kann manuell und/oder automatisch vorgesehen sein. Zur Kontrastverstärkung, Detailverstärkung und Bildspeicherung kann ein Video-signalprozessor benutzt werden. Für die automatische Erkennung von Gefahrsituationen können weitere Auswerteeinrichtungen vorgesehen sein.

Aus der WO-A-92 21205 ist es bekannt, durch das Objektiv einer CCD-Kamera die Umgebung optoelektronisch aufzunehmen und entsprechende Bildsignale an eine Bildverarbeitungselektronik zu geben, die ihrerseits die aufbereiteten Bildsignale an eine LCD-Anzeige über eine Ansteuerung abgibt. Die Kamera kann so ausgebildet sein, dass sie bei schlechten Sichtverhältnissen wie Nebel oder Dunkelheit durch eine entsprechende Anpassung wie z.B. Infrarotempfindlichkeit oder Restlichverstärkung die Sicht für den Fahrer wesentlich verbessert.

Der Erfindung liegt die Aufgabe zugrunde, die Wahrnehmung von außerhalb des sichtbaren Spektrums aufgenommenen Bildern von Verkehrsszenen durch den Fahrer zu verbessern.

Diese Aufgabe wird bei einer Vorrichtung und einem Verfahren nach den Oberbegriffen der Patentansprüche 1 und 2 durch deren kennzeichnende Merkmale gelöst.

Die erfindungsgemäß aufbereiteten Bilder unterstützen den Fahrer in Situationen, in denen wenig oder kein Tageslicht vorhanden ist, etwa des Nachts, in einem Tunnel oder bei Nebel und sonstiger schlechter Witterung, indem sie dem Fahrer wertvolle Informationen in der ihm vertrauten Form geben.

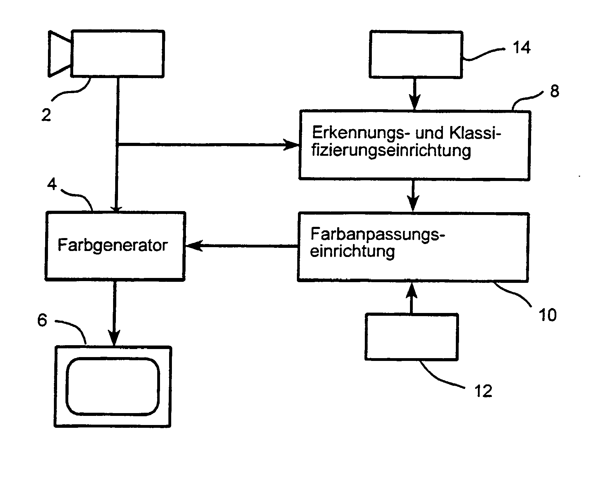

Weitere Merkmale und Vorteile der Erfindung ergeben sich aus der folgenden Beschreibung von Ausführungsbeispielen anhand der Zeichnung. Deren einzige Figur zeigt einen Prinzipaufbau einer Vorrichtung zur Verbesserung der Sicht in Fahrzeugen.

Die Vorrichtung enthält eine Kamera 2 als Bildsensor, die im Dachbereich eines Fahrzeuges angeordnet ist, derart, dass sie die Verkehrsszene aufnimmt, die sich in Fahrtrichtung darbietet. Die Kamera 2 ist außerhalb des sichtbaren Spektrums empfindlich, entweder im nahen Infrarot mit Unterstützung durch einen fahrzeugeigenen Infrarotscheinwerfer, im fernen Infrarot unter Restlichtausnutzung, oder für ultraviolettes Licht, das von einem fahrzeugeigenen Ultraviolettscheinwerfer erzeugt wird.

Das von der Kamera 2 ausgegebene Videobild ist in diesem Ausführungsbeispiel "monochrom", d.h. es stellt das aufgenommene Bild mit über das Empfindlichkeitsspektrum summierten oder gemittelten Helligkeitswerten dar.

Das Videosignal der Kamera 2 wird einem Farbgenerator 4 zugeführt, der im Stand der Technik den verschiedenen Helligkeitswerten im Videobild vorbestimmte RGB-Werte zuordnet, mit denen eine Anzeigeoptik 6 im Fahrzeug angesteuert wird, welche das Videobild dem Fahrer in Pseudofarben darstellt.

Wie hierin beschrieben, erfolgt die Zuordnung der RGB-Werte zumindest in Teilen des Videobildes nicht allein in Abhängigkeit von der Bildhelligkeit, sondern zusätzlich oder ausschließlich in Abhängigkeit vom Typ der im Bild enthaltenen Objekte. Dies geschieht dadurch, dass das Videosignal der Kamera 2 außerdem einer Erkennungs- und Klassifizierungseinrichtung 8 zugeführt wird, die die Verkehrsszene nach Objekten durchsucht, die vorbestimmten Erscheinungsmustern entsprechen. Für die vorliegende Anwendung wichtige Objekte sind zum Beispiel Fahrzeuge, Personen, Tiere, Straße, Wald, Wiese usw.. Informationen, anhand derer die Erkennung und Klassifizierung erfolgen kann, sind zum Beispiel Umrisse, relative Helligkeiten und Strukturierungen.

Wird ein solches Objekt erkannt, führt die Erkennungs- und Klassifizierungseinrichtung 8 Informationen über das Objekt, insbesondere dessen Typ, Umriss und Position innerhalb des Videobildes, einer Farbanpassungseinrichtung 10 zu. Die Farbanpassungseinrichtung 10 ordnet dem Objekt anhand von Kontextinformationen, die in einem Speicher 12 gespeichert sind, eine Farbe zu, die das Objekt bei Tageslicht typischerweise hat, und steuert den Farbgenerator 4, das Objekt in dieser Farbe und einer passenden relativen Helligkeit auf der Anzeigeoptik 6 wiederzugeben. Die gespeicherten Kontextinformationen sind zum Beispiel, dass Wiesen im Sommer grün sind, dass Straßenbeläge üblicherweise grau sind usw.. In Fällen, in denen es keine allgemein gültigen Regeln gibt, z.B. bei der Farbe von Fahrzeugen oder der Kleidung von Personen, kann irgendeine auszuwählende Farbe voreingestellt sein, im Falle von Personen vorzugsweise eine, die zu den in der Natur häufigen Farben in Kontrast steht.

Für die Erkennung, Klassifizierung und Farbanpassung können weitere Informationen herangezogen werden, die von Sensoren 14 oder anderen Informationsquellen geliefert werden, die häufig ohnehin in einem Fahrzeug vorhanden sind, z.B. einem Außenthermometer, einer Uhr, einem Regensensor usw.. Wenn zum Beispiel ein Regensensor anzeigt, dass es regnet, wird die Fahrbahn auf der Anzeigeoptik 6 dunkler wiedergegeben als bei Trockenheit, um größere Realitätsnähe zu erzeugen. Oder, falls ein Fahrzeugnavigationssystem die Information liefert, dass man gerade überwiegend durch Waldgebiete fährt, kann diese Information die realitätsnahe Klassifizierung und Wiedergabe der entsprechenden Bildbereiche erleichtern.

Die Erkennungsgenauigkeit und Realitätsnähe kann weiter gesteigert werden, indem man statt der einfachen "monochromen" Kamera 2 eine "Mehrfarben"-IR-Kamera verwendet, eine Kamera, die zu jedem Bildpunkt Intensitäten bei unterschiedlichen Wellenlängen liefert, d.h. eine mehr oder weniger detailliertere spektrale Verteilung. Die bei einer bestimmten Tageszeit und Witterung gemessene spektrale Verteilung eines erkannten Objektes wird dann von der Farbanpassungseinrichtung 10 anhand von gespeicherten Erfahrungswerten in ein Tageslichtspektrum umgerechnet, d.h. ein Spektrum, mit dem das Objekt eine Helligkeit und Farbe hat, die der Helligkeit und Farbe des Objektes bei Tageslicht möglichst ähnlich ist.

Durch entsprechende Behandlung aller relevanten Objekte in dem aufgenommenen Bild sieht der Fahrer z.B. bei Nacht die Umgebung in einer ihm vertrauten Form auf der Anzeigeoptik 6, und zwar mit Details, die er unter den gegebenen Umständen nicht oder nur schwer selbst erkennen könnte.

Die Anzeigeoptik 6 kann ein Display oben auf der Armaturentafel oder ein Projektor zum Einspiegeln des Bildes in einen Bereich der Frontscheibe nach Art eines Head-up-Displays sein.

Die Anzeigeoptik 6 muss nicht unbedingt farbfähig sein; auch eine monochrome Anzeigeoptik kann nach dem oben beschriebenen Prinzip angesteuert werden, IR-Bilder tageslicht-ähnlicher wiederzugeben, indem nur die Wiedergabehelligkeiten der Objekte passend verändert werden.

Sobald weiter fortentwickelte Flachbildschirme zu Verfügung stehen, ist es auch denkbar, die Frontscheibe vollständig durch ein Display als Anzeigeoptik 6 zu ersetzen, das im ausgeschalteten Zustand transparent sein müsste. In diesem Fall kann die Umgebung bei Nacht 1:1 auf dem gesamten Frontscheiben-Display abgebildet werden, so dass der Fahrer den Eindruck hat, bei Tag zu fahren. Die oben beschriebene Erkennung, Klassifizierung und Farbanpassung von Objekten in IR-Bildern wird für zuverlässig und realitätsgetreu genug erachtet, um so eine Anwendung zu ermöglichen.

## Patentansprüche

1. Verfahren zur Verbesserung der Sicht in Fahrzeugen, insbesondere bei Dunkelheit, schlechter Witterung und Nebel, bei dem Bilder aktueller Verkehrsszenen mittels einer Kamera (2) aufgenommen werden, die außerhalb des sichtbaren Spektrums empfindlich ist, und mittels einer Anzeigeoptik (6) im Fahrzeug im sichtbaren Spektrum wiedergegeben werden,
**dadurch gekennzeichnet,**
**dass** in den Bilddaten der Kamera (2) mittels einer Erkennungs-und Klassifizierungseinrichtung (8) automatisch in der aufgenommenen Verkehrszene enthaltene Objekte nach ihrem Typ erkannt werden,
und **dass** mittels einer Farbanpassungseinrichtung (10) den nach ihrem Typ klassifizierten Objekten anhand einer in einem Speicher (12) gespeicherten Kontextinformation eine Farbe zugeordnet wird und so auf der Anzeigeoptik (6) angezeigt wird,
wobei die Farbe einer Farbe und Helligkeit entspricht, die das entsprechende Objekt bei Tageslicht typischerweise hat.

2. Verfahren nach Anspruch 1, **dadurch gekennzeichnet, dass** zur Erkennung, Klassifizierung und Farbanpassung, weitere Informationen von Sensoren und anderen Informationsquellen herangezogen werden.

3. Verfahren nach Anspruch 2, **dadurch gekennzeichnet, dass** die Information eines Regensensors herangezogen wird, um bei Regen die Farbe einer Fahrbahn dunkler einzufärben.

4. Verfahren nach Anspruch 2, **dadurch gekennzeichnet, dass** die Information eines Navigationssystems herangezogen wird, um im Rahmen der Erkennung und Klassifikation die Erkennungswahrscheinlichkeit bestimmter Objekte zu erhöhen.

5. Vorrichtung zur Verbesserung der Sicht in Fahrzeugen, insbesondere bei Dunkelheit, schlechter Witterung und Nebel, mit einer außerhalb des sichtbaren Spektrums empfindlichen Kamera (2) zur Aufnahme von Bildern aktueller Verkehrsszenen und einer Anzeigeoptik (6) im Fahrzeug zur Wiedergabe der aufgenommenen Bilder im sichtbaren Spektrum, **gekennzeichnet durch** eine Erkennungs- und Klassifizierungseinrichtung (8) zur automatischen Erkennung des Typs von Objekten, die aus den Bilddaten der Kamera (2) in der aufgenommenen Verkehrsszene enthalten sind und eine dieser nachgeschalteten Farbanpassungseinrichtung (10, 4), die die nach ihrem Typ klassifizierten Objekte anhand einer in einem Speicher (12) gespeicherter Kontextinformation eine Farbe zuordnet, mit der die nach ihrem Typ Klassifizierten Objekte auf der Anzeigeoptik (6) angezeigt werden, wobei die Farbe einer Farbe und Helligkeit entspricht, die das entsprechende Objekt bei Tageslicht typischerweise hat.

6. Vorrichtung nach Anspruch 5, **dadurch gekennzeichnet, dass** die Vorrichtung mit weiteren Sensoren, insbesondere einem Regensensor oder einem Außenthermometer, und/oder weiteren Informationsquellen, insbesondere einem Navigationssystem oder einer Uhr, in Verbindung steht.

## Claims

1. Method for improving the visibility in vehicles, in particular in the dark, in bad weather and in fog, in which method current traffic scenes are recorded by means of a camera (2) which is sensitive outside the visible spectrum, and are reproduced in the vehicle in the visible spectrum by means of an optical display system (6), **characterized in that** objects contained in the recorded traffic scene are recognized automatically according to their type in the recorded traffic scene in the image data of the camera (2) by means of a recognition and classification device (8),
and **in that** a colour is assigned by means of a colour adaptation device (10) to the objects which are classified according to their type, by means of context information which is stored in a memory (12), and said colour is displayed in this way on the optical display system (6),
the colour corresponding to a colour and brightness which the corresponding object typically has in daylight.

2. Method according to Claim 1, **characterized in that** further information from sensors and other information sources is used to recognize, classify and adapt colours.

3. Method according to Claim 2, **characterized in that** the information from a rain sensor is used to make the colour of a carriageway darker in rain.

4. Method according to Claim 2, **characterized in that** the information from a navigation system is used to increase the recognition reliability of specific objects within the scope of the recognition and classification.

5. Device for improving the visibility in vehicles, in particular in the dark, in bad weather and in fog, with a camera (2) which is sensitive outside the visible spectrum and is used to record traffic scenes, and an optical display system (6) in the vehicle for reproducing the recorded images in the visible spectrum, **characterized by** a recognition and classification device (8) for automatically recognizing the type of objects which are contained in the recorded traffic scene from the image data of the camera (2) and a colour adaptation device (10, 4) which is connected downstream of the latter and which, by means of context information which is stored in a memory (12), assigns a colour to the objects which are classified according to their type, with which colour the objects which are classified according to their type are displayed on the optical display system (6), the colour corresponding to a colour and brightness which the corresponding object typically has in daylight.

6. Device according to Claim 5, **characterized in that** the device is connected to further sensors, in particular a rain sensor or an external thermometer and/or further information sources, in particular a navigation system or a clock.

## Revendications

1. Procédé pour améliorer la visibilité dans les véhicules, notamment en cas d'obscurité, de mauvais temps et de brouillard, avec lequel des images de la scène de circulation actuelle sont enregistrées au moyen d'une caméra (2) qui est sensible en-dehors du spectre visible et sont reproduites dans le spectre visible au moyen d'un optique d'affichage (6) dans le véhicule, **caractérisé en ce que** dans les données d'image de la caméra (2), les objets contenus dans la scène de circulation enregistrée sont identifiés automatiquement en fonction de leur type au moyen d'un dispositif d'identification et de classification (8) et qu'une couleur est associée aux objets classifiés en fonction de leur type au moyen d'un dispositif d'adaptation chromatique (10) à l'aide d'une information contextuelle enregistrée dans une mémoire (12) et ainsi affichée sur l'optique d'affichage (6), la couleur correspondant à une couleur et une luminosité que possède typiquement l'objet correspondant à la lumière du jour.

2. Procédé selon la revendication 1, **caractérisé en ce que** d'autres informations en provenance de capteurs et d'autres sources d'information sont utilisées pour l'identification, la classification et l'adaptation chromatique.

3. Procédé selon la revendication 2, **caractérisé en ce que** les informations d'un détecteur de pluie sont utilisées pour donner une teinte plus foncée à la couleur d'une voie de circulation par temps de pluie.

4. Procédé selon la revendication 2, **caractérisé en ce que** les informations d'un système de navigation sont utilisées pour augmenter la probabilité d'identification de certains objets dans le cadre de l'identification et de la classification.

5. Dispositif pour améliorer la visibilité dans les véhicules, notamment en cas d'obscurité, de mauvais temps et de brouillard, comprenant une caméra (2) qui est sensible en-dehors du spectre visible destinée à enregistrer des images de la scène de circulation actuelle un optique d'affichage (6) dans le véhicule pour reproduire les images enregistrées dans le spectre visible, **caractérisé par** un dispositif d'identification et de classification (8) pour l'identification automatique du type des objets issus des données d'image de la caméra (2) et contenus dans la scène de circulation enregistrée et un dispositif d'adaptation chromatique (10, 4) branché à la suite de celui-ci qui, au moyen d'une information contextuelle enregistrée dans une mémoire (12), associe aux objets classifiés en fonction de leur type une couleur avec laquelle les objets classifiés en fonction de leur type seront affichés sur l'optique d'affichage (6), la couleur correspondant à une couleur et une luminosité que possède typiquement l'objet correspondant à la lumière du jour.

6. Dispositif selon la revendication 5, **caractérisé en ce que** le dispositif est en liaison avec d'autres capteurs, notamment un capteur de pluie ou un thermomètre extérieur et/ou d'autres sources d'information, notamment un système de navigation ou une horloge.
